# EUROPEAN PATENT APPLICATION

(11) **EP 3 902 250 A1**
(43) Date of publication of application: **27.10.2021**
(21) Application number: 21168881.7
(22) Date of filing: 16.04.2021
(51) Int. Cl.: H04N 17/00, B60R 1/00, G06T 7/80

(54) **CALIBRATION DEVICE AND CALIBRATION METHOD**

(30) Priority: 20.04.2020 JP 2020074578
(71) Applicant: Faurecia Clarion Electronics Co., Ltd., Saitama-shi, Saitama 330-0081 (JP)
(72) Inventor: SAKANO, Morihiko, Tokyo 100-8280 (JP); KAWABE, Manabu, Tokyo 100-8280 (JP)
(74) Representative: Lavoix

(57) **Abstract**

The present invention calibrates parameters indicating an orientation of a camera even if a road surface on which a vehicle travels is not flat.

A calibration device 100 is installed in a self-vehicle 1A, and includes a feature point extraction unit 154 configured to extract, from a captured image of a camera 4 installed in the self-vehicle 1A, a feature point included in a region of the captured image in which a road surface around the self-vehicle 1A is captured; a self-vehicle body recognition unit 153 configured to extract, from the captured image, a vehicle body feature point included in a region of the captured image in which a vehicle body 10 of the self-vehicle 1A is captured; and an external parameter estimation unit 158 configured to calibrate, based on the feature point extracted by the feature point extraction unit 154 and the vehicle body feature point extracted by the self-vehicle body recognition unit 153, external parameters 125 indicating a mounting state of the camera 4 relative to the self-vehicle 1A.

## Description

### BACKGROUND OF THE INVENTION

### Field of the Invention

The present invention relates to a calibration device and a calibration method.

### Description of the Related Art

In recent years, installation of cameras onto vehicles for the purpose of automated driving or assisted driving is progressing. Cameras are mounted to vehicles at positions and orientations based on a design, but the occurrence of errors when mounting the cameras is inevitable. When performing distance calculation, etc. using images captured by the cameras, such mounting errors greatly influence the accuracy of the calculated distance.

Therefore, it is a common practice to prepare external parameters to correct mounting errors of an onboard camera, and taking the external parameters of the camera into consideration when performing distance calculation, etc. While external parameters can be calculated using predetermined test patterns or the like in a factory before shipping, it is known that passengers boarding or disembarking or moving of heavy objects in the vehicle causes the orientation of the vehicle to change, which strictly speaking causes the external parameters to change. There is therefore a need to estimate the external parameters while the vehicle is travelling on a road, in other words, a calibration of the external parameters. If it is possible to calibrate the external parameters while the vehicle is travelling, calculation of the external parameters prior to shipping can be omitted, which helps to reduce the number of working processes.

Patent Document 1 discloses a calibration device including an onboard camera; a camera parameter calculation unit configured to calculate camera parameters consisting of the installation elevation and angle of the onboard camera at the time of capturing from a characteristic amount of a road surface sign photographed by the onboard camera and recognized by an image processing; and a camera parameter calibration unit configured to perform optical axis calibration control of the onboard camera by the camera parameters output from the camera parameter calculation unit.

### Citation List

### Patent Documents

[Patent Document 1] Japanese Patent Laid-Open No. 2008-11174

### SUMMARY OF THE INVENTION

### Problem(s) to be Solved by the Invention

However, in the invention described in Patent Document 1, highly accurate calibration of external parameters of the onboard camera is difficult when the surrounding road surface is not flat.

The present invention was made in view of the above circumstances, and an object of the present invention is to calibrate parameters indicating the orientation of the camera with high accuracy even when the road surface on which a vehicle travels is not flat.

### Means for Solving the Problem

In order to solve the above problem, a calibration device according to the present invention is a calibration device installed in a vehicle, the calibration device including: an input unit into which a captured image of a camera installed in the vehicle is input; a first feature point extraction unit configured to extract, from the captured image, a first feature point included in a region in which a road surface around the vehicle is captured; a second feature point extraction unit configured to extract, from the captured image, a second feature point included in a region in which a vehicle body of the vehicle is captured; and a calibration unit configured to calibrate, based on the first feature point and the second feature point, parameters indicating an orientation of the camera relative to the vehicle.

### Effects of the Invention

According to the present invention, it is possible to calibrate parameters indicating the orientation of the camera with high accuracy even when the road surface on which a vehicle travels is not flat.

### BRIEF DESCRIPTION OF THE DRAWINGS

FIG. 1 is a block diagram showing a configuration of a vehicle;
FIG. 2 shows an example of a configuration of a feature point registration table;
FIG. 3 is an explanatory drawing showing an operation of a processor executing a while-driving calibration program;
FIG. 4 is an explanatory drawing showing the influence of a drainage gradient on estimation;
FIG. 5 shows an example of an image of a vehicle body of a self-vehicle seen from a camera mounted on the right side of the self-vehicle;
FIG. 6 is a flowchart showing an overall processing flow of the calibration device;
FIG. 7 is a flowchart showing a processing operation of a self-vehicle body recognition unit;
FIG. 8 is a flowchart showing a processing operation of a feature point extraction unit;
FIG. 9 is a flowchart showing a processing operation of a tracking unit;
FIG. 10 is a flowchart showing a processing operation of an external parameter estimation unit; and
FIG. 11 is a flowchart showing a processing operation of an external parameter estimation unit according to a second embodiment of the present invention.

### DETAILED DESCRIPTIONS OF THE PREFERRED EMBODIMENTS

### [First Embodiment]

### 1. Configuration of calibration device

An embodiment of the present invention is described below with reference to the appended drawings.

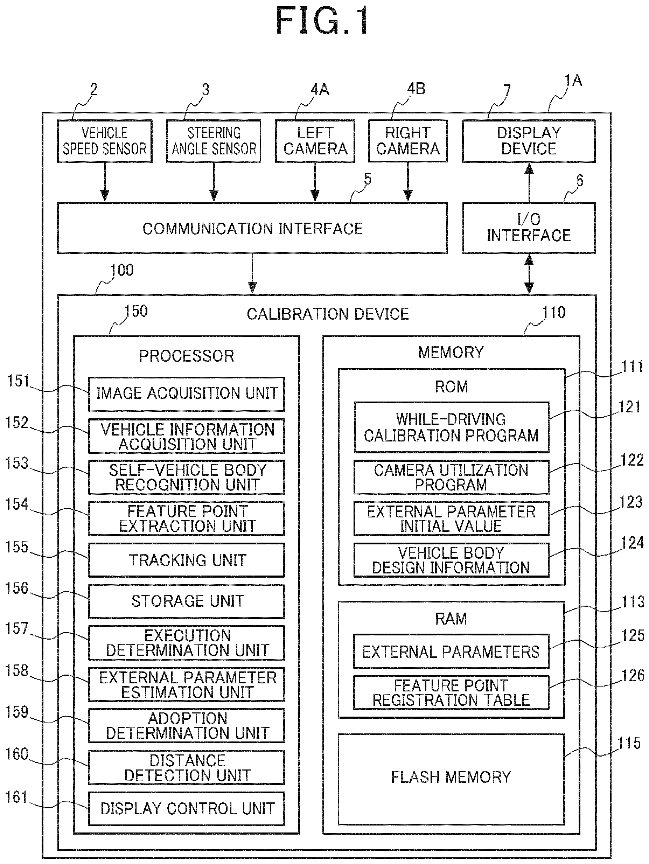

FIG. 1 is a block diagram showing a configuration of a vehicle provided with a calibration device 100 applying the present invention. In the below description, the vehicle in which the calibration device 100 is installed is referred to as "self-vehicle 1A".

The calibration device 100 is installed in the self-vehicle 1A. The calibration device 100 is a device for executing a calibration method according to the present invention. The calibration device 100 is a device for correcting external parameters 125 indicating a mounting state of a camera 4 relative to the self-vehicle 1A. The external parameters 125 indicating the mounted state of the camera 4 include triaxial angles and elevation of the camera 4. The triaxial angles are angles indicating the orientation of the camera 4 relative to the self-vehicle 1A and include a roll angle, a pitch angle, and a yaw angle. The elevation is, for example, an elevation of the camera 4 from a reference position. As the reference position is selected, for example, a vehicle body 10 of the self-vehicle 1A, or a road surface. Further details of the external parameters 125 will be described later.

The calibration device 100 is connected to an onboard network (not shown) via a communication interface 5. A vehicle speed sensor 2, a steering angle sensor 3, the camera 4, etc. are connected to the onboard network. Various types of networks, such as, for example, CAN, LIN (Local Interconnect Network), FlexRay®, Ethernet® may be employed as the onboard network.

The vehicle speed sensor 2 is a sensor that detects the vehicle speed of the self-vehicle 1A. The vehicle speed sensor 2 outputs sensor data indicating the detected vehicle speed to the calibration device 100. The steering angle sensor 3 is a sensor that detects the steering angle of a steering wheel of the self-vehicle 1A. The steering angle sensor 3 outputs sensor data indicating the detected steering angle to the calibration device 100.

The camera 4 is mounted to both left and right sides of a vehicle width direction of the self-vehicle 1A. The camera 4 that is mounted to the left side of the self-vehicle 1A is called a left camera 4A, and the camera 4 that is mounted to the right side of the self-vehicle 1A is called a right camera 4B. The left camera 4A and the right camera 4B are collectively referred to as the camera 4.

The camera 4 captures images of an environment including the side of the self-vehicle 1A. The image capturing range of the camera 4 includes a road surface on which the self-vehicle 1A drives. Design values such as position and orientation of the camera 4 relative to the self-vehicle 1A are stored as external parameter initial values 123 in a flash memory 115 described below. However, as it is inevitable that a deviation from the design values occurs in the mounting of the camera 4 to the self-vehicle 1A, the ideal external parameters 125 corresponding to an actual mounted state do not match the external parameter initial values 123 which are the design values.

The camera 4 includes a lens, an image capturing element, and a data processing circuit that generates a captured image from a light reception state of the image capturing element. The camera 4 outputs the generated captured image to the calibration device 100 via the communication interface 5.

In addition, a display device 7 is connected to the calibration device 100 via an I/O interface 6. The I/O interface 6 is an interface into which data is input/ output. The display device 7 includes, for example, a display panel such as a liquid crystal panel, and is controlled by the calibration device 100 to display information.

The calibration device 100 is a computer device including a memory 110 and a processor 150. The memory 110 includes a ROM (Read Only Memory) 111, a RAM (Random Access Memory) 113, and a flash memory 115.

The ROM 111 stores a computer program to be executed by the calibration device 100 and parameters. The ROM 111 according to the present embodiment stores a while-driving calibration program 121, a camera utilization program 122, the external parameter initial values 123, and vehicle body design information 124. The ROM 111 corresponds to a "storage unit" according to the present invention. In addition, the vehicle body design information 124 corresponds to "vehicle body design information" according to the present invention.

The while-driving calibration program 121 and the camera utilization program 122 are computer programs which are to be executed by the processor 150. The while-driving calibration program 121 is a program that is to be executed by the processor 150 at the time of calibration of the external parameters 125.

The camera utilization program 122 is a program which, based on the image captured by the camera 4, calculates a distance between the self-vehicle 1A and another vehicle (hereinafter referred to as another vehicle 1B) present in the vicinity of the self-vehicle 1A.

The processor 150 requires the external parameters 125 and internal parameters of the camera 4 when executing the camera utilization program 122, and loads these parameters from the flash memory 115. If the external parameters 125 and the internal parameters are not stored in the flash memory 115, the processor 150 about to execute the camera utilization program 122 loads internal parameter initial values and the external parameter initial values 123 stored in the ROM 111.

The external parameter initial values 123 are the design values of the external parameters 125.

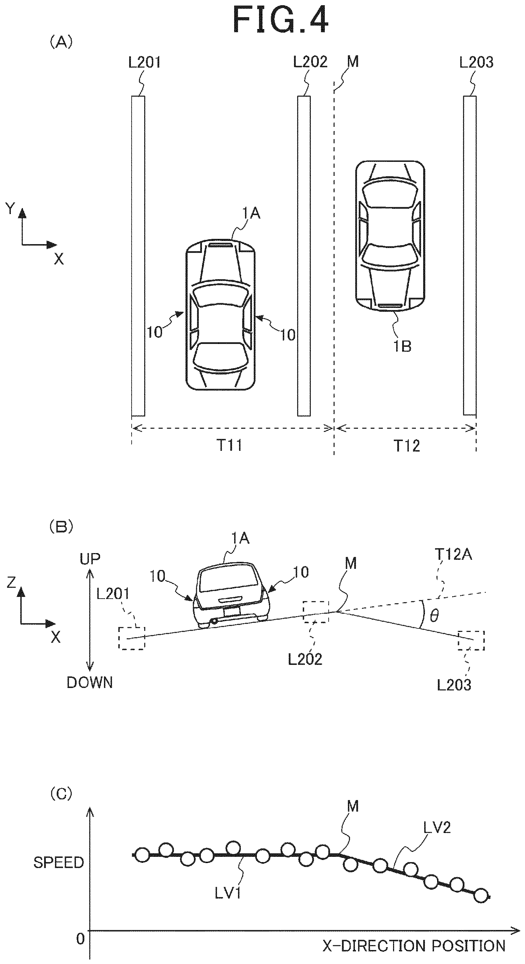

The vehicle body design information 124 is, for example, CAD data showing designed positions of vehicle body feature points such as edges of the vehicle body's sides. If the camera 4 is mounted to the vehicle body 10 (see FIG. 4) of the self-vehicle 1A as designed, the position of the captured image of the vehicle body 10 can be calculated based on the external parameters 125 and the vehicle body design information 124.

In addition, the ROM 111 stores, as internal parameter initial values, a lens distortion coefficient which is a parameter indicating lens distortion, an optical axis center, a focal length, and a number of pixels and dimensions of the image capturing element.

The RAM 113 stores data that is processed when the processor 150 executes a computer program and data of the processed results. The RAM 113 according to the present embodiment stores the external parameters 125 and a feature point registration table 126.

As stated above, the external parameters 125 are parameters indicating the mounted state of the camera 4, and include the triaxial angles and elevation of the camera 4. Further, the external parameters 125 are used to perform a bird's-eye view conversion of the image captured by the camera 4. Bird's-eye view conversion refers to converting the image captured by the camera 4 into an image that appears to have been captured by a camera virtually positioned above the self-vehicle 1A. The external parameters 125 are calculated by the processor 150 that executes the while-driving calibration program 121. The external parameters 125 stored in the RAM 113 are values in the middle of the calibration process, and are used while being rewritten until the calibration has finished.

The flash memory 115 is a nonvolatile semiconductor memory. The flash memory 115 according to the present embodiment stores the external parameters 125 generated by the processor 150 executing the while-driving calibration program 121.

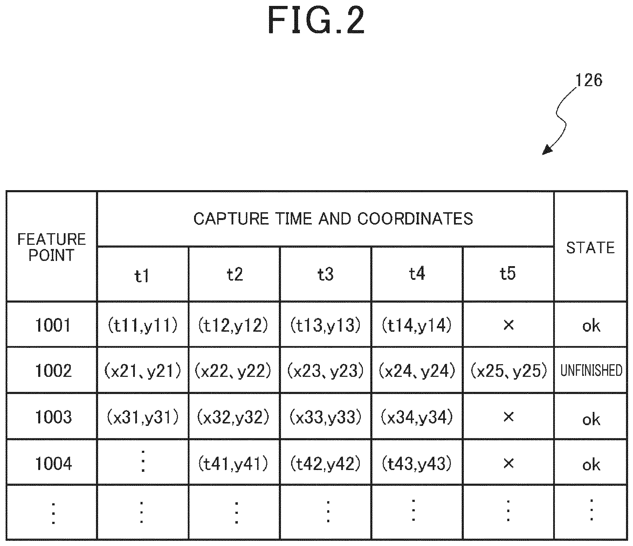

Here, the feature point registration table 126 will be described with reference to FIG. 2. FIG. 2 shows an example of a configuration of the feature point registration table 126.

One record of the feature point registration table 126 registers information regarding one feature point. Information regarding one feature point includes coordinates of the feature point and a tracking state of the feature point, and the information regarding the feature points is stored in association with feature point identifiers.

A feature point is an intersection or corner edge in the image, such as, for example, a corner of a wall, a corner of a curb, a corner of a dashed line, a corner of a crosswalk. The corner edge may be extracted by applying, for example, well-known art such as Harris Corner Detector.

The feature point identifiers are identifying information that identifies feature points. In the present embodiment, a case is described in which the feature point identifiers are sequential numbers assigned to the extracted feature points in order, but it is enough that the feature point identifiers can identify the feature points.

The coordinates of a feature point are the coordinates in the captured image in which the feature point has been detected. The coordinates of the feature point are registered in the feature point registration table 126 in association with the time of capture of the captured image in which the feature point was detected. Hereinafter, a coordinate system set for the captured image is referred to as an image coordinate system. The image coordinate system has its origin in the top left of the captured image, with right being the positive direction of the X-axis, and down being the positive direction of the Y-axis. Further, while FIG. 2 shows an example in which five capture times t1, t2, t3, t4, and t5 are registered in the feature point registration table 126, it is enough that the number of capture times registered in the feature point registration table 126 is sufficient for calculating a movement speed of a feature point trajectory described below. Since increasing the number of capture times registered in the feature point registration table 126 infinitely expands the table size, putting stress on the memory, the table is utilized in a circular manner, by using well-known ring buffer technology or the like.

In addition, the capture time does not have to be the time at which a captured image was captured, but may be, for example, an elapsed time since the calibration device 100 was switched on, or the time at which the coordinates of the feature point were registered in the feature point registration table 126.

The feature point registration table 126 shown in FIG. 2 shows that three feature points have been extracted from the captured image captured at time t1, four feature points have been extracted from each of the captured images captured at times t2, t3, and t4, and one feature point has been extracted from the captured image captured at time t5.

In addition, of the four feature points extracted from the captured images of times t2 and t3, the feature points identified by the feature point identifiers 1001, 1002, and 1003 indicate that tracking is ongoing since time t1.

Since the feature points identified by the feature point identifiers 1001, 1003, and 1004 were not extracted from the captured image captured at time t5, an "x" mark is registered in the corresponding fields of the feature point registration table 126.

The tracking state of a feature point is information indicating whether or not tracking of the feature point has finished. In the example feature point registration table 126 shown in FIG. 2, "OK" is registered in the tracking state field of each feature point for which tracking of the feature point has finished, and "unfinished" is registered in the state field of each feature point for which feature point tracking has not finished. An external parameter estimation unit 158 described below uses trajectories of feature points for which the tracking state in the feature point registration table 126 is finished, in other words, "OK" is registered in the tracking state field, to calibrate the external parameters 125.

Further, the feature point registration table 126 shown in FIG. 2 is created separately for images captured by the left camera 4A and images captured by the right camera 4B. That is to say, a feature point registration table 126 registering information regarding feature points detected from images captured by the left camera 4A and a feature point registration table 126 registering information regarding feature points detected from images captured by the right camera 4B are separately created. The feature point registration table 126 registering information regarding feature points detected from images captured by the left camera 4A is referred to as a left feature point registration table 126A. Likewise, the feature point registration table 126 registering information regarding feature points detected from images captured by the right camera 4B is referred to as a right feature point registration table 126B.

In addition, each record of the feature point registration table 126 may be provided with a field for registering whether the detected feature point is a feature point detected from an image captured by the left camera 4A or a feature point detected from an image captured by the right camera 4B. In this case, the number of feature point registration tables 126 to be created can be one.

Returning to FIG. 1, the description of the configuration of the calibration device 100 will now resume.

The processor 150 is a computing device such as a CPU (Central Processing Unit) or a microprocessor. The processor 150 may be constituted by a single processor, or by a plurality of processors. Alternatively, the processor 150 may be constituted by a SoC (System on Chip) or FPGA (field-programmable gate array) integrated with part or all of the memory 110 or other circuits. The processor 150 may also be constituted by a combination of a CPU for executing a program and a DSP (Digital Signal Processor) for executing a predetermined computation process. Further, the processor 150 may be of a configuration in which all the functions of the processor 150 are implemented in hardware, and may be constituted by a programmable device.

FIG. 1 shows a block diagram showing the functional structures of the calibration device 100 as blocks on a function basis. Functional structures mean the functions that are realized by the processor 150 executing the while-driving calibration program 121.

The calibration device 100 includes, as function blocks, an image acquisition unit 151, a vehicle information acquisition unit 152, a self-vehicle body recognition unit 153, a feature point extraction unit 154, a tracking unit 155, a storage unit 156, an execution determination unit 157, an external parameter estimation unit 158 and an adoption determination unit 159, and a distance detection unit 160 and a display control unit 161.

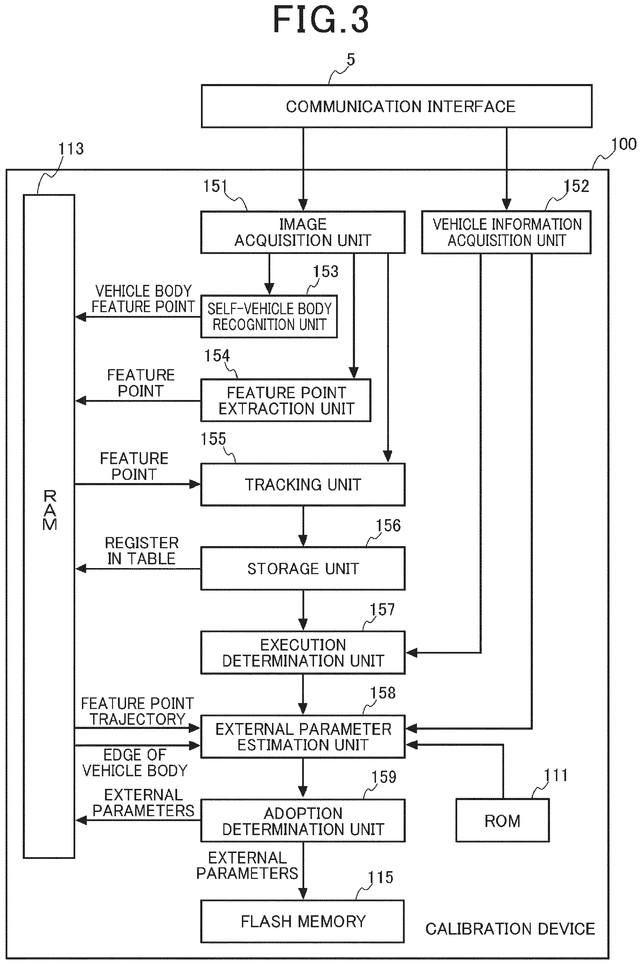

FIG. 3 is an explanatory drawing showing an operation of the processor 150 executing the while-driving calibration program 121.

FIG. 3 shows a flow of data between each of the functional blocks and between the functional blocks and the memory 110 when the processor 150 executes the while-driving calibration program 121. The operations of the functional blocks of the calibration device 100 will be described with reference to FIG. 3.

The image acquisition unit 151 causes the camera 4 to capture an image. Upon being instructed by the image acquisition unit 151 to capture an image, the camera 4 captures images at a high frequency, for example, 30 times per second, and outputs the captured images obtained by the image capture to the calibration device 100. Each time a captured image is input, the image acquisition unit 151 outputs the input captured image to the feature point extraction unit 154 and the tracking unit 155. Alternatively, in order to reduce processing load, the image acquisition unit 151 may be configured to output the input captured images to the feature point extraction unit 154 and the tracking unit 155 at once in a predetermined number of times.

The vehicle information acquisition unit 152 is input with sensor data indicating a vehicle speed from the vehicle speed sensor 2, and sensor data indicating a steering angle from the steering angle sensor 3. The vehicle information acquisition unit 152 outputs the vehicle speed and the steering angle indicated by the input sensor data to the execution determination unit 157 and the external parameter estimation unit 158 as vehicle information. The vehicle information acquisition unit 152 may output the vehicle speed and the steering angle indicated by the input sensor data to the execution determination unit 157 and the external parameter estimation unit 158 as instantaneous values, or may respectively integrate the vehicle speed and the steering angle and output them to the execution determination unit 157 and the external parameter estimation unit 158.

The self-vehicle body recognition unit 153 performs image processing of the captured images input from the image acquisition unit 151 to extract vehicle body feature points which are feature points of the vehicle body 10 of the self-vehicle 1A. The self-vehicle body recognition unit 153 uses well-known art such as a Sobel filter to extract edges of the lower end of the side surface of the vehicle body 10 as vehicle body feature points. The self-vehicle body recognition unit 153 stores coordinates of the extracted vehicle body feature points in the image coordinate system in the RAM 113. The self-vehicle body recognition unit 153 corresponds to a "second feature extraction unit" according to the present invention. Further, the vehicle body feature points extracted by the self-vehicle body recognition unit 153 correspond to a "second feature point" according to the present invention.

The feature point extraction unit 154 performs image processing of the captured image input from the image acquisition unit 151 to extract feature points present in the vehicle surroundings separate from the vehicle body 10 of the self-vehicle 1A. The feature point extraction unit 154 extracts corner edges as described above. The feature point extraction unit 154 stores coordinates of the extracted corner edges in the image coordinate system in the RAM 113. The feature point extraction unit 154 corresponds to a "first feature point extraction unit" according to the present invention. Further, the feature points extracted by the feature point extraction unit 154 correspond to a "first feature point" according to the present invention.

The tracking unit 155 is input with captured images from the image acquisition unit 151. In addition, the tracking unit 155 loads coordinates of the feature points extracted by the feature point extraction unit 154 and stored in the RAM 113. The coordinates of the feature points loaded by the tracking unit 155 are the coordinates extracted by the feature point extraction unit 154, and are the coordinates of feature points extracted from a captured image from one frame before the captured image input from the image acquisition unit 151.

The tracking unit 155 tracks the same feature point across captured images captured at different times and calculates a feature point trajectory which is a trajectory of the feature point. The feature point trajectory corresponds to the movement trajectory according to the present invention. The tracking unit 155 tracks the feature point acquired from the captured image from one frame before. In other words, the tracking unit 155 detects a feature point from the input captured image which is identical to the feature point acquired from the captured image from one frame before and calculates the feature point trajectory. Tracking of the feature point can be done using known tracking methods such as SAD (Sum of Absolute Difference) or SSD (Sum of Squared Difference), or the LK (Lucas-Kanade) method. The tracking unit 155 outputs information regarding the calculated feature point trajectory to the storage unit 156.

The storage unit 156 registers the information regarding the feature point trajectory input from the tracking unit 155 in the feature point registration table 126. Further, the storage unit 156 outputs the information regarding the feature point trajectory input from the tracking unit 155 to the execution determination unit 157.

The execution determination unit 157 determines whether or not to execute calibration based on the information regarding the feature point trajectory input from the storage unit 156. Executing the calibration in a state where the total number of feature point trajectories is low leads to significantly incorrect calibration results in case an error sequence is included. Therefore, the execution determination unit 157 outputs a calibration execution command to the external parameter estimation unit 158 when the number of feature points of which "OK" is registered in the tracking state field becomes equal to or greater than a predetermined number.

In addition, executing the calibration requires feature point trajectories of areas respectively on the left and right sides in the movement direction as seen from the center of the self-vehicle. The execution determination unit 157 outputs the calibration execution command to the external parameter estimation unit 158 when the number of feature points of which "OK" is registered in the tracking state field becomes equal to or greater than a predetermined number in both the left feature point registration table 126A and the right feature point registration table 126B.

The external parameter estimation unit 158 corresponds to a "calibration unit" according to the present invention, and calculates the external parameters 125 of the camera 4 assuming that the plurality of acquired feature point trajectories exist on the same plane. The external parameter estimation unit 158 uses the current external parameters 125 to perform a bird's-eye view conversion of the position of the feature point trajectory calculated by the tracking unit 155, i.e., the position of the feature point registered in the feature point registration table 126, so that the position appears as if seen from above the self-vehicle 1A.

Next, the external parameter estimation unit 158 uses the angle and length of the feature point trajectory from a bird's-eye viewpoint to estimate the triaxial angles and elevation of the camera 4. The triaxial angles and elevation of the camera 4 correspond to the parameters indicating the mounted state of the camera 4 relative to the self-vehicle 1A. The feature point trajectory registered in the feature point registration table 126 is, when the self-vehicle 1A is moving straight ahead, a feature point trajectory acquired from the road surface plane with which the self-vehicle 1A is in contact. Therefore, if the triaxial angles and elevation of the camera 4 match the external parameters 125 used in the computation, then the plurality of feature point trajectories from a bird's-eye viewpoint will be parallel to each other, perpendicular to a vertical direction of the bird's-eye view image, and of a predetermined length. These feature point trajectories are ideal trajectories.

Alternatively, if the triaxial angles and elevation of the camera 4 do not match the external parameters 125 used in the calculation, that is to say if there is an error in the external parameters 125, there will be a characteristic difference between the feature point trajectories from a bird's-eye viewpoint and the respective ideal trajectories. If there is an error in the pitch angle, then the feature point trajectory from a bird's-eye viewpoint will open in an inverted truncated V-shape. If there is an error in the yaw angle, then a difference in length will occur between the feature point trajectories on the left and right of the self-vehicle 1A from a bird's-eye viewpoint. If there is an error in the roll angle, the feature point trajectories overall will be rotated diagonally. If there is an error in the elevation of the camera 4, there will be a difference in length of the feature point trajectories from the predetermined length.

The external parameter estimation unit 158 calibrates the external parameters 125 by changing the values of the external parameters 125 using well-known optimization technology to bring them closer to the ideal trajectories. However, the ideal trajectories are only possible within a scope in which the road surface can be considered to be a plane. Actual roads are provided with a legally required drainage gradient of a few percent in the width direction of the road, to prevent the accumulation of rainwater on the road. Therefore, the images will include road surfaces that are not planar. The influence thereof becomes noticeable at a certain angle, which certain angle is difficult to estimate accurately. Thus, the angle which is difficult to estimate due to the drainage gradient is estimated with reference to the vehicle body 10. After estimation by an optimization process has finished, the external parameters 125 are output to the adoption determination unit 159.

The adoption determination unit 159 is input with the external parameters 125 from the external parameter estimation unit 158. The adoption determination unit 159 determines whether or not to adopt the input external parameters 125 as final parameters. If the adoption determination unit 159 determines that the input external parameters 125 may be adopted as the final parameters, it stores the external parameters 125 in the flash memory 115. On the other hand, if the adoption determination unit 159 has determined that the input external parameters 125 are not to be adopted as the final parameters, it stores them as estimation-in-progress external parameters 125 in the RAM 113. The external parameters 125 stored in the RAM 113 are used as initial values when the next image is input. In addition, the adoption determination unit 159 initializes the information regarding the feature points registered in the feature point registration table 126.

The adoption determination unit 159 determines whether or not to adopt the input external parameters 125 as the final parameters through three determinations; convergence determination, number determination, and image determination. The convergence determination determines whether or not a variation of the values of the external parameters 125 is sufficiently small through a comparison with past values of the external parameters 125. In other words, the adoption determination unit 159 determines whether or not the values of the external parameters 125 is within a predetermined range. The number determination verifies the external parameters 125 several times to determine whether or not the same value is obtained within a predetermined range. The image determination verifies the bird's-eye view image to determine whether or not the image can be considered a correct bird's-eye view image.

The adoption determination unit 159 determines that the external parameters 125 may be adopted as the final parameters if they pass all of the convergence determination, number determination, and image determination, and writes the input external parameters 125 into the flash memory 115. When the adoption determination unit 159 writes the external parameters 125 into the flash memory 115, the calibration of the external parameters 125 is finished. In the event that the adoption determination unit 159 determines that the external parameters only pass the convergence determination and the image determination, it counts up the number of times that passed the number determination, clears the feature points sequence and the computation-in-progress external parameters 125 stored in the RAM 113, and restarts from the initial state.

The distance detection unit 160 calculates a distance to another vehicle 1B based on the image captured by the camera 4. The distance detection unit 160 corrects the image captured by the camera 4 using the external parameters 125 and the internal parameters, and calculates the distance to the another vehicle 1B based on the corrected captured image.

The display control unit 161 controls a display of the display device 7. When the distance to the another vehicle 1B detected by the distance detection unit 160 becomes equal to or less than a predetermined set distance, the display control unit 161 generates display data to be displayed by the display device 7 and outputs the generated display data to the display device 7. This display data includes a message notifying a driver of the self-vehicle 1A of danger.

FIG. 4 is explanatory drawings showing the influence of a drainage gradient on estimation. FIG. 4(A) is a plan view of a road, FIG. 4(B) is a cross-sectional view of the road, and FIG. 4(C) is a graph showing the movement speed of the feature points. FIG. 4 (A) to (C) defines common XYZ axes. However, the coordinate system shown in FIG. 4 is referred to as a "space coordinate system", in order to distinguish it from the X-axis and Y-axis of the image coordinate system. In the space coordinate system, the X-axis is parallel to the width direction of the road, the Y-axis is parallel to the movement direction of the self-vehicle 1A, and the Z-axis indicates an up-down direction.

A white line L201, a centerline L202, and a white line L203 are painted on the road. On the opposite side of the centerline L202 from the self-vehicle 1A, another vehicle 1B is traveling in the opposing lane. The dashed line M shown in FIG. 4(A) indicates the peak position of a gradient of the road. Below, this peak position is referred to as a peak position M. The road on which the self-vehicle 1A travels is prescribed by law to have a gradient of a few percent in the width direction of the road, in other words, a transverse gradient, in order to prevent the accumulation of rainwater on the road. Therefore, roads often have a structure in which the central portion of the road is high, and the road gently slopes downward in the width direction. However, there are cases in which the peak position M of the transverse gradient and the central portion in the width direction of the centerline L202 do not match. In the example shown in FIG. 4, the peak position M of the gradient is located further toward the right side of the drawing than the centerline L202.

FIG. 4(B) is a cross-sectional view of the road, in which positions in the illustrated width direction correspond to those of FIG. 4(A). The vertical direction of FIG. 4(B) corresponds to the up-down direction, and the positions of the white line L201 and the white line L203 at the left and right edges of the drawing are the lowest, while the road becomes higher toward the central portion. As in FIG. 4(A), the peak position M slightly to the right of the centerline L202 is the highest.

In the example shown in FIG. 4(B), the cross-sectional shape in the Y-direction is constant, which is to say that the road shown in FIG. 4 is composed of a first surface T11 on the left side of the peak position M and a second surface T12 on the right side of the peak position M. The first surface T11 can also be said to be the surface with which the self-vehicle 1A is in contact. An imaginary surface made by extending the first surface T11 beyond the peak position M to the side of the second surface T12 is referred to as an imaginary second surface T12A. Further, an angle between the second surface T12 and the imaginary second surface T12A is referred to as an angle difference θ.

FIG. 4(C) is a conceptual drawing showing a relation between positions of detected feature point trajectories and the movement speed of the self-vehicle 1A. In FIG. 4(C), it is assumed that all the feature points exist on the same plane with which the self-vehicle 1A is in contact, in other words on the first surface T11 or the imaginary second surface T12A. Each white circle shown in FIG. 4(C) represents a feature point trajectory, indicating a faster movement speed the higher in the drawing the white circle is present. When the self-vehicle 1A moves, the feature points present on the first surface T11 which is on the same plane as the self-vehicle 1A are observed from the self-vehicle 1A as moving in the opposite direction of the movement of the self-vehicle 1A at the same speed, because the feature points are fixed to the ground. However, because the feature points present on the second surface T12 are assumed to exist on the imaginary second surface T12A, they are calculated as positions projected onto the imaginary second surface T12A, and are observed as having a slower movement speed than in actuality.

FIG. 4(C) shows a case in which the distribution of feature point trajectories is approximated by two straight lines LV1 and LV2. The position in the road width direction of the intersection of LV1 and LV2 matches the peak position M. The difference in orientation of LV1 and LV2 corresponds to the angle between the first surface T11 and the second surface T12, in other words, the angle difference θ. Accordingly, in a case where, for example, only the feature points on the second surface T12 are used, the angle is estimated with the error of the angle difference θ added thereto. The pitch angle (angle of depression, up-down direction) of the camera 4 corresponds to the angle difference θ.

Alternatively, in case the camera 4 is a front camera capturing images of the front of the self-vehicle 1A or a rear camera capturing images of the rear of the self-vehicle 1A, the roll angle of the camera 4 (panning, horizontal direction) corresponds to this angle difference θ.

In practice, feature point trajectories of the first surface T11 and the second surface T12 will be included, but accuracy will decrease by the portion of feature point trajectories of the second surface T12 included. The boundary position between the first surface T11 and the second surface T12 will change depending on the position and road on which the self-vehicle 1A travels, and differs depending on the environment. For this reason, it is difficult to avoid constant mixing. Therefore, when calibrating the pitch angle (angle of depression, up-down direction) of the camera 4, the external parameters 125 are estimated by referring to the vehicle body 10 while avoiding referring to the road surface. In addition, if the camera 4 is a rear camera or a front camera, then when calibrating the roll angle (panning, horizontal direction), the external parameters 125 are estimated by referring to the vehicle body 10 while avoiding referring to the road surface. By referring to the vehicle body 10, estimation can be done without being influenced by the drainage gradient, since the road surface is not referred to. While there are parameters that cannot be estimated by the method using the vehicle body 10, it is possible to estimate the pitch angle of the camera 4 mounted to both sides of the self-vehicle 1A, and thus both methods are used to complement each other.

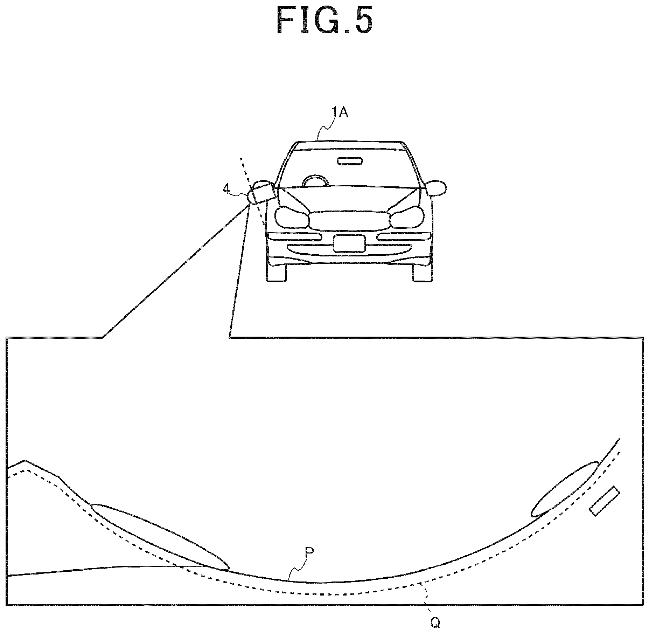

FIG. 5 shows an example of an image of the vehicle body 10 of the self-vehicle 1A seen from the camera 4 mounted on the right side of the self-vehicle 1A. In this example of the image of the vehicle body 10, a fisheye camera is used as the camera 4, but so long as the camera is able to capture images of the vehicle body 10 of the self-vehicle 1A, it is not limited to a fisheye camera. The camera 4 is mounted, for example, below the side-view mirror of the self-vehicle 1A facing down, to capture images of a position of the vehicle body 10 further below the mounting position of the camera 4.

The self-vehicle body recognition unit 153 recognizes, for example, an edge P of the lower end of the side surface of the vehicle body 10. Shown in dashed line is a position of an ideal edge Q of the lower end of the side surface of the vehicle body 10, which is captured by the camera 4 when the camera 4 is mounted in an ideal manner. The edge Q of the lower end of the side surface of the vehicle body 10 is obtained by calculating from the external parameters 125 and the vehicle body design information 124 how the vehicle body of the self-vehicle 1A appears to the camera 4. The edge P of the lower end of the side surface of the vehicle body 10 recognized by the self-vehicle body recognition unit 153 is referred to as a recognized edge P, and the ideal edge Q obtained through calculation is referred to as ideal edge Q.

In the estimation of the pitch angle of the camera 4, the external parameter estimation unit 158 estimates the pitch angle so that the position of the recognized edge P matches the position of the ideal edge Q. This estimation can be realized by a well-known optimization process.

### 2. Overall flow of the calibration device

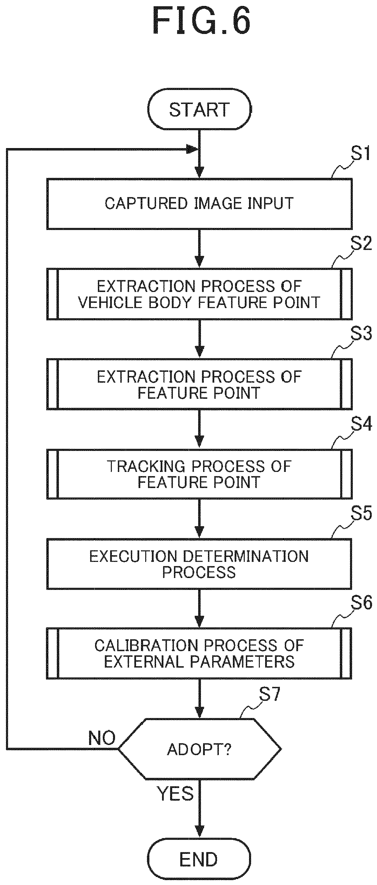

FIG. 6 is a flowchart showing an overall processing flow of the calibration device 100. The overall processing flow of the calibration device 100 will be described with reference to the flowchart shown in FIG. 6.

At Step S1, the calibration device 100 causes the camera 4 to capture an image. An image captured by the camera 4 is input into the calibration device 100.

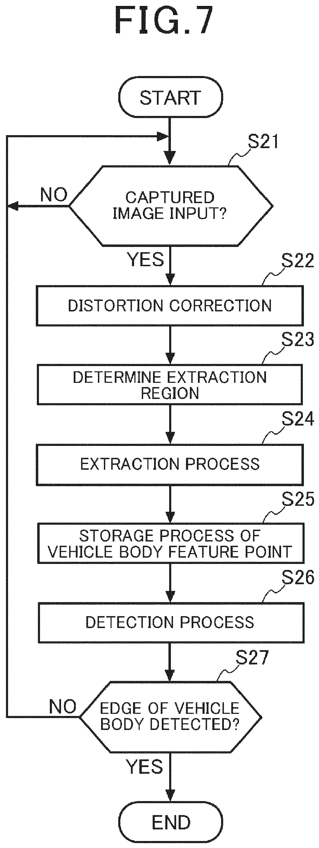

At Step S2, the calibration device 100 executes an extraction process of vehicle body feature points. This process is executed by the self-vehicle body recognition unit 153. Details of Step S2 will be described with reference to the flowchart shown in FIG. 7. Step S2 corresponds to a "second extraction step" according to the present invention.

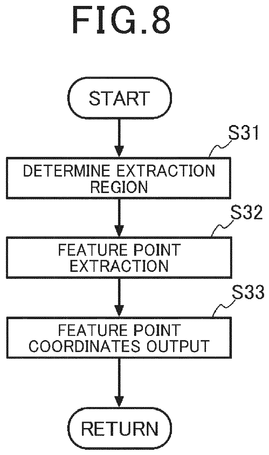

At Step S3, the calibration device 100 executes an extraction process of feature points. This process is executed by the feature point extraction unit 154. Details of Step S3 will be described with reference to the flowchart shown in FIG. 8. Step S3 corresponds to a "first extraction step" according to the present invention.

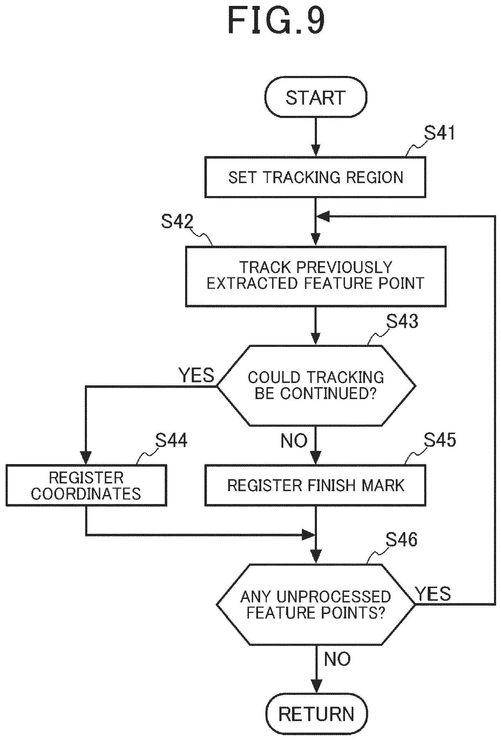

At Step S4, the calibration device 100 executes a tracking process of feature points. This process is executed by the tracking unit 155. Details of Step S4 will be described with reference to the flowchart shown in FIG. 9.

At Step S5, the calibration device 100 executes an execution determination process. This process is executed by the execution determination unit 157. As described above, the execution determination unit 157 outputs a calibration execution command to the external parameter estimation unit 158 when the number of feature points of which "OK" is registered in the tracking state field becomes equal to or greater than a predetermined number in both the left feature point registration table 126A and the right feature point registration table 126B.

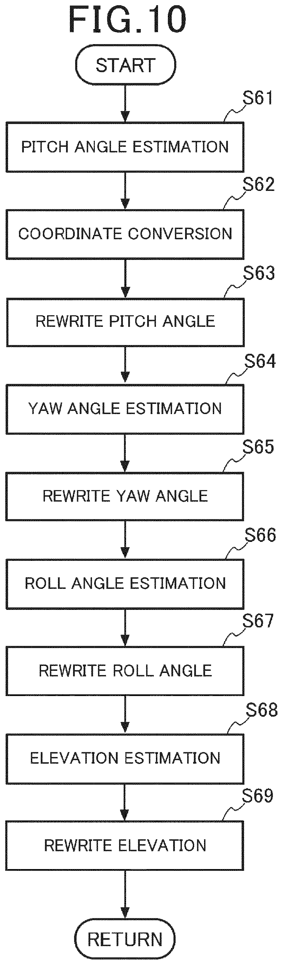

At Step S6, the calibration device 100 executes a calibration process of the external parameters 125 if it has been determined that calibration is to be executed. This process is executed by the external parameter estimation unit 158. Details of Step S6 will be described with reference to the flowchart shown in FIG. 10. Step S6 corresponds to a "calibration step" according to the present invention.

At Step S7, the calibration device 100 determines whether or not to adopt the external parameters 125 calibrated by the calibration process of Step S6 as final parameters. This process is executed by the adoption determination unit 159. If the adoption determination unit 159 adopts the input external parameters 125 as the final parameters, the adoption determination unit 159 stores the external parameters 125 in the flash memory 115. On the other hand, if the adoption determination unit 159 does not adopt the input external parameters 125 as the final parameters, the adoption determination unit 159 stores the external parameters 125 as estimation-in-progress external parameters 125 in the RAM 113, and repeats the process from Step S1.

### 3. Operation flow of the self-vehicle body recognition unit 153

FIG. 7 is a flowchart showing a processing operation of the self-vehicle body recognition unit 153 executing the extraction process of vehicle body feature points. The processing operation of the self-vehicle body recognition unit 153 will be described with reference to the flowchart shown in FIG. 7. The subject performing the operations of each step shown in FIG. 7 is the processor 150.

At Step S21, the self-vehicle body recognition unit 153 determines whether or not a captured image has been input from the image acquisition unit 151. If the determination is negative, the self-vehicle body recognition unit 153 waits to start the process until a captured image has been input from the image acquisition unit 151. Alternatively, if the determination is positive, the self-vehicle body recognition unit 153 proceeds to Step S22.

At Step S22, the self-vehicle body recognition unit 153 executes a distortion correction. In case a fisheye camera is used as the camera 4, the captured image generated by the fisheye camera captures the actually straight edge of the vehicle body 10 as a curved line, making it difficult to recognize the edge of the vehicle body 10. Therefore, the self-vehicle body recognition unit 153 removes the distortion of the captured image in advance to make the line straight. The distortion correction can be performed using the design information of the camera 4. This process straightens the lines of the edge of the vehicle body 10, making the edge of the vehicle body 10 easier to recognize.

At Step S23, the self-vehicle body recognition unit 153 determines an extraction region of the captured image from which to extract the edge of the vehicle body 10 of the self-vehicle 1A. The self-vehicle body recognition unit 153 determines the extraction region from which to extract the edge of the vehicle body 10 based on the image capturing direction of the camera 4. Based on the shape design information of the vehicle body 10 of the self-vehicle 1A included in the vehicle body design information 124, the self-vehicle body recognition unit 153 calculates a range in which the edge of the vehicle body 10 to be recognized is visible. A mounting error range of the external parameters 125 is limited to a certain range based on design tolerance. The self-vehicle body recognition unit 153 takes this into consideration when calculating the range in which the edge of the vehicle body 10 to be recognized is visible, and determines the range obtained through the calculation as the extraction region.

At Step S24, the self-vehicle body recognition unit 153 executes an extraction process. The self-vehicle body recognition unit 153 uses a known Sobel filter or the like in the extraction region of the captured image determined at Step S23 to extract a vehicle body feature point corresponding to the edge of the lower end of the side surface of the vehicle body 10. Hereinafter, the edge of the lower end of the side surface of the vehicle body 10 is referred to as the edge of the vehicle body 10. The edge of the vehicle body 10 extracted in this extraction process may sometimes include things other than the edge of the vehicle body 10 which are extracted as the edge of the vehicle body 10 due to road surface signs, etc. provided on the road surface being visible near the vehicle body 10 or the influence of white clipping caused by reflected sunlight, etc.

At Step S25, the self-vehicle body recognition unit 153 executes a storage process of storing coordinates of the extracted vehicle body feature point in the RAM 113. The self-vehicle body recognition unit 153 executes the extraction process over a plurality of frames of captured images, and stores the coordinates of the extracted results, the vehicle body feature points, in the RAM 113. In the RAM 113, coordinates of vehicle body feature points determined to be the same edge are stored in association with each other. Storage of the vehicle body feature points in the RAM 113 may be done by approximating the position (coordinates in the image coordinate system) of the edge of the vehicle body 10 by a linear equation and storing the parameters of the approximated linear equation in the RAM 113. The position of the edge of the vehicle body 10 may also be transformed by a known Hough transform or the like, and the transformed results stored in the RAM 113.

At Step S26, the self-vehicle body recognition unit 153 detects the edge of the vehicle body 10 based on a number of detections of the plurality of vehicle body feature points stored in the RAM 113. The self-vehicle body recognition unit 153 compares the number of detections of the vehicle body feature points stored in the RAM 113 with each other to detect the edge of the vehicle body 10.

As described above, the edge of the vehicle body 10 extracted in the extraction process includes things other than the edge of the vehicle body 10. However, even though the influence of the surroundings visible around the self-vehicle 1A changes as the self-vehicle 1A travels, the position of the edge of the vehicle body 10 captured in the captured images does not change. Because of this, the edge of the vehicle body 10 can be detected based on the number of detections of the edge over a plurality of frames. For example, if a difference between a maximum peak and a second biggest peak is equal to or greater than a predetermined value, the self-vehicle body recognition unit 153 determines that the position indicated by the maximum peak is the edge of the vehicle body 10.

At Step S27, if the edge of the vehicle body 10 has been detected, the self-vehicle body recognition unit 153 stores the image of the detected edge of the vehicle body 10 in the RAM 113. Thereafter, once detection has been successful, the self-vehicle body recognition unit 153 does not need to execute the process shown in the flowchart of FIG. 7 again.

Alternatively, at Step S27, if the edge of the vehicle body 10 could not be detected, the self-vehicle body recognition unit 153 returns to the determination of Step S21. For example, if the difference between the maximum peak and the second biggest peak is smaller than the predetermined value, the self-vehicle body recognition unit 153 determines that detection of the edge of the vehicle body 10 has failed, and executes the series of processes shown in FIG. 6 in the next frame.

### 4. Operation flow of the feature point extraction unit 154

FIG. 8 is a flowchart showing a processing operation of the feature point extraction unit 154 executing the extraction process of feature points. The processing operation of the feature point extraction unit 154 will be described with reference to the flowchart shown in FIG. 8. The feature point extraction unit 154 executes the processing operation described below every time a captured image is input from the image acquisition unit 151. The subject performing the operations of each step described below is the processor 150.

At Step S31, the feature point extraction unit 154 determines an extraction region, which is a region of the captured image from which feature points are to be extracted, based on the movement direction of the self-vehicle 1A and the image capturing direction of the camera 4 relative to the movement direction of the self-vehicle 1A. The bigger the area of the extraction region, the longer the calculation process will take. Therefore, in order to perform the calculation process in real time, there is a need to reduce processing load caused by calculating redundant regions. Accordingly, the feature point extraction unit 154 sets the extraction region to extract feature points at a location away from the self-vehicle 1A.

At Step S32, the feature point extraction unit 154 extracts feature points from the extraction region determined at Step S31. In particular, the feature point extraction unit 154 preferably extracts corner edges, which are intersections of edges. The feature point extraction unit 154 applies Harris Corner Detector or the like to the feature point extraction region determined at Step S31 to extract corner edges.

At Step S33, the feature point extraction unit 154 stores the coordinates of the feature points extracted at Step S32 in the RAM 113, and finishes the process.

### 5. Operation flow of the tracking unit 155

FIG. 9 is a flowchart showing a processing operation of the tracking unit 155 executing a tracking process of feature points. The processing operation of the tracking unit 155 will be described with reference to the flowchart shown in FIG. 9. The tracking unit 155 executes the processing operations described below every time a captured image is input from the image acquisition unit 151. The subject performing the operations of each step described below is the processor 150.

At Step S41, the tracking unit 155 sets a tracking region which is a region subject to the tracking process of feature points. Specifically, the tracking unit 155 estimates a movement direction and movement distance of coordinates of a feature point based on the coordinates of the feature point loaded from the RAM 113 and vehicle information acquired by the vehicle information acquisition unit 152. The coordinates of the feature point loaded by the tracking unit 155 from the RAM 113 are the coordinates extracted by the feature point extraction unit 154 from the captured image from one frame before. Based on the estimated movement direction and movement distance, the tracking unit 155 sets the tracking region in which to track feature points in the captured image input from the image acquisition unit 151.

The captured image used in the estimation of the movement direction and movement distance is not limited to the captured image from one frame before. For example, the tracking unit 155 may estimate the movement direction and movement distance based on captured images over a plurality of frames, or estimate the movement direction and movement distance using a captured image other than the captured image from one frame before. In other words, the movement direction and movement distance of a feature point may be estimated using a captured image that was captured at an earlier time.

At Step S42, the tracking unit 155 tracks the coordinates of the feature point loaded from the RAM 113 in the captured image input from the image acquisition unit 151. The tracking unit 155 uses, for example, known tracking methods such as SAD or the LK method to track the feature point. Hereinafter, the feature point whose coordinates are loaded from the RAM 113 is referred to as a subject feature point.

At Step S43, the tracking unit 155 determines whether or not tracking of the feature point could be continued. For example, if a matching degree of SAD, etc. is equal to or less than a predetermined threshold, the tracking unit 155 determines that the subject feature point cannot be tracked for reasons such as the subject feature point deviating from the angle of view of the camera 4. In addition, if the subject feature point crosses a certain predetermined line in the captured image or deviates from a certain region, the tracking unit 155 forcefully finishes the tracking. The reason for this forceful finishing of the tracking is because it is assumed that the subject feature point will deviate from the angle of view of the camera 4 in the next captured image, or because the distance from the captured subject has become far and tracking is no longer necessary. If tracking of the subject feature point can be continued, the tracking unit 155 proceeds to Step S44, and if tracking is finished, the tracking unit 155 proceeds to Step S45.

At Step S44, the tracking unit 155 registers the coordinates of the tracked feature point in a record of the feature point registration table 126 which registers information regarding subject feature points, in a row associated with a time at which the captured image of the subject feature point was captured. Further, at Step S45, the tracking unit 155 registers a mark indicating that tracking has finished, for example, an "x", in a record of the feature point registration table 126 which registers information regarding subject feature points, in a row associated with a time at which the captured image subject to processing was captured.

When the process of Step S44 or Step S45 is finished, then, at Step S46, the tracking unit 155 determines whether or not the processes of Steps S42 to S45 have been executed with all feature points extracted at Step S32 as subject feature points. If there are unprocessed feature points that have not been selected as subject feature points, the tracking unit 155 returns to the process of Step S42. Alternatively, if there are no unprocessed feature points that have not been selected as subject feature points, the tracking unit 155 finishes the processing flow.

### 6. Operation flow of the external parameter estimation unit 158

FIG. 10 is a flowchart showing a processing operation of the external parameter estimation unit 158 executing a calibration process of the external parameters 125. The operations of the external parameter estimation unit 158 will be described with reference to the flowchart shown in FIG. 10. The external parameter estimation unit 158 executes the operations described below every time an execution command is input from the execution determination unit 157. The subject performing the operations of each step described below is the processor 150.

At Step S61, the external parameter estimation unit 158 estimates the pitch angle of the external parameters 125. The external parameter estimation unit 158 performs estimation of the pitch angle using the external parameters 125 stored in the RAM 113, the vehicle body design information 124, and the vehicle body feature point recognized by the self-vehicle body recognition unit 153 in the computation.

The external parameter estimation unit 158 corrects the pitch angle so that the edge of the vehicle body 10 recognized by the self-vehicle body recognition unit 153 matches the position of the vehicle body feature point which should be visible if the camera 4 is mounted at a mounting position calculated based on the vehicle body design information 124. Specifically, the external parameter estimation unit 158 designs an objective function to evaluate a matching degree of the vehicle body feature point, and estimates the pitch angle by minimizing the objective function relative to the pitch angle using a well-known technique.

The external parameter estimation unit 158 rewrites the pitch angle of the external parameters 125 with the pitch angle estimated at Step S61. The external parameter estimation unit 158 stores the rewritten pitch angle of the external parameters 125 in the RAM 113. This updates the values of the external parameters 125 stored in the RAM 113.

At Step S62, the external parameter estimation unit 158 performs coordinate conversion of the pitch angle estimated at Step S61. The pitch angle estimated at Step S61 is detected based on the edge of the vehicle body 10, and is a parameter for correcting a mounting error of the camera 4 on the basis of the edge of the vehicle body 10.

However, in the subsequent Steps S64 to S66, the external parameter estimation unit 158 calculates the external parameters 125 on the basis of the road surface. If parameters calculated on different bases are used as they are, consistency cannot be ensured. Therefore, the external parameter estimation unit 158 performs coordinate conversion of the external parameters 125. The external parameter estimation unit 158 performs coordinate conversion of the pitch angle so that the external parameters 125 on the basis of the edge of the vehicle body 10 estimated in Step S61 become parameters on the basis of the road surface. At Step S63, the external parameter estimation unit 158 stores the pitch angle of the coordinate-converted external parameters 125 in the RAM 113.

Next, at Step S64, the external parameter estimation unit 158 estimates the yaw angle of the external parameters 125. The external parameter estimation unit 158 estimates the yaw angle through a computation using information on the feature point trajectories stored in the feature point registration table 126 and the external parameters 125 updated by the process of Step S61.

The external parameter estimation unit 158 designs an objective function to evaluate the verticality of the feature point trajectories, that is to say how closely the feature point trajectories follow the movement direction in a bird's-eye view. The external parameter estimation unit 158 realizes yaw angle estimation by minimizing the designed objective function relative to the yaw angle using a well-known technique. The objective function designed here is based on a function to evaluate the verticality of one feature point trajectory, and the external parameter estimation unit 158 designs the total sum of the objective functions of all of the feature point trajectories as an objective function to estimate the pitch angle. Therefore, the yaw angle is calculated so that all the feature point trajectories are oriented as much as possible in a vertical direction. At Step S65, the external parameter estimation unit 158 rewrites the yaw angle of the external parameters 125 with the estimated yaw angle and stores the rewritten yaw angle in the RAM 113.

At Step S66, the external parameter estimation unit 158 estimates the roll angle of the external parameters 125. The external parameter estimation unit 158 estimates the roll angle through a computation using information on the feature point trajectories stored in the feature point registration table 126 and the external parameters 125 updated by the process of Step S64. The external parameter estimation unit 158 designs an objective function to evaluate the parallelism of the feature point trajectories, and estimates the roll angle by minimizing the objective function relative to the roll angle using a well-known technique. The objective function designed here is based on a function to evaluate the parallelism of two feature point trajectories, creates a plurality of pairs of two feature point trajectories, and the external parameter estimation unit 158 designs the total sum of the objective functions of all of the created pairs of feature point trajectories as an objective function to estimate the roll angle. Therefore, the roll angle is corrected so that all the feature point trajectories become as parallel as possible.

In addition, the selected pairs of feature point trajectories combine feature point trajectories on the left side of the center of the self-vehicle 1A and feature point trajectories on the right side of the center of the self-vehicle 1A, in other words, feature point trajectories on the left side of the movement direction of the self-vehicle 1A and feature point trajectories on the right side of the movement direction of the self-vehicle 1A. As selected pairs of feature point trajectories, all conceivable combinations may be selected, or only some of these may be selected. At Step S67, the external parameter estimation unit 158 rewrites the roll angle of the external parameters 125 with the estimated roll angle and stores the rewritten roll angle in the RAM 113.

At Step S68, the external parameter estimation unit 158 performs estimation of the elevation of the mounting position of the camera 4. The external parameter estimation unit 158 estimates the elevation of the mounting position of the camera 4 through a computation using information on the feature point trajectories stored in the feature point registration table 126 and the external parameters 125 updated by the processes of Steps S63, S65, and S67.

The external parameter estimation unit 158 realizes elevation estimation by using a well-known technique to minimize an objective function expressing a difference between the length of the feature point trajectories and a length of the ideal trajectory predicted from the vehicle information. The objective function is designed to minimize the difference between the length of all feature point trajectories and the length of the ideal trajectory. Therefore, the elevation is corrected so that the length difference between all the feature point trajectories and the ideal trajectory becomes as small as possible, that is to say, to come closer to an ideal bird's-eye viewpoint. At Step S69, the external parameter estimation unit 158 rewrites the elevation of the external parameters 125 with the elevation estimated at Step S68, and stores the elevation in the RAM 113.

As described above, the calibration device 100 according to the first embodiment is installed in the self-vehicle 1A and includes the image acquisition unit 151, the self-vehicle body recognition unit 153, the feature point extraction unit 154, and the external parameter estimation unit 158.

The image acquisition unit 151 is input with the captured image from the camera 4 installed in the self-vehicle 1A.

The self-vehicle body recognition unit 153 extracts vehicle body feature points included in a region of the captured image in which the vehicle body 10 of the self-vehicle 1A is captured.

The feature point extraction unit 154 extracts the feature points included in the region of the captured image in which the road surface around the self-vehicle 1A is captured.

The external parameter estimation unit 158 calibrates the external parameters 125 indicating a mounting state of the camera 4 relative to the self-vehicle 1A based on the vehicle body feature points and the feature points.

In a case where the elevation in the width direction of the road on which the self-vehicle 1A travels is not constant and there is an elevation difference, causing the external parameters 125 to be inaccurate parameters due to the influence of the elevation difference, the calibration device 100 calibrates the external parameters 125 indicating the mounting state of the camera 4 based on the vehicle body feature points extracted from the vehicle body 10 of the self-vehicle 1A. Alternatively, in a case where the external parameters 125 are subjected to little influence by the road and are parameters with a low reduction of accuracy, the calibration device 100 calibrates the external parameters 125 indicating the mounting state of the camera 4 based on the feature points extracted from the road surface around the self-vehicle 1A. Accordingly, calibration of the external parameters 125 can be performed with a high accuracy.

The external parameters 125 calibrated by the external parameter estimation unit 158 include the pitch angle which is an orientation angle of the camera relative to the self-vehicle 1A. If the captured image is a captured image capturing the side of the self-vehicle 1A, the external parameter estimation unit 158 calibrates the pitch angle based on the vehicle body feature points extracted from the region in the captured image in which the vehicle body 10 of the self-vehicle 1A is captured. Accordingly, the pitch angle of the external parameters 125 that are inaccurate due to the influence of the elevation difference in the width direction of the road can be calibrated with a high accuracy.

The external parameters 125 calibrated by the external parameter estimation unit 158 include the yaw angle and roll angle which are orientation angles of the camera relative to the self-vehicle 1A. If the captured image is a captured image capturing the side of the self-vehicle 1A, the external parameter estimation unit 158 extracts the feature points included in the region of the captured image in which the road surface around the self-vehicle 1A is captured to calibrate the yaw angle and roll angle.

Accordingly, by calibrating the yaw angle and roll angle, which are not significantly influenced by the elevation difference in the width direction of the road, based on the feature points extracted from the captured image of the road surface, the yaw angle and roll angle can be calibrated with a high accuracy.

The calibration device 100 includes the ROM 111 storing the vehicle body design information 124 of the vehicle body 10 of the self-vehicle 1A.

The external parameter estimation unit 158 calibrates the pitch angle so that the vehicle body feature points extracted by the self-vehicle body recognition unit 153 match the positions of the vehicle body feature points calculated based on the vehicle body design information 124.

Accordingly, calibration of the pitch angle can be performed with a high accuracy based on the vehicle body feature points.

In addition, the feature point extraction unit 154 extracts feature points from a plurality of captured images. The calibration device 100 includes a tracking unit 155 that tracks the feature points extracted by the feature point extraction unit 154 to obtain feature point trajectories.

The external parameter estimation unit 158 selects feature point trajectories obtained by the tracking unit 155 and calibrates the yaw angle and roll angle based on the selected feature point trajectories. Accordingly, the yaw angle and roll angle can be calibrated with a high accuracy.

In addition, if the captured image is a captured image capturing the side of the self-vehicle 1A, the self-vehicle body recognition unit 153 extracts the lower edge of the side surface of the self-vehicle 1A as a feature point.

Accordingly, the feature point can easily be extracted from the captured image, and calibration of the pitch angle can be performed with a high accuracy based on the extracted feature point.

### [Second Embodiment]

In the first embodiment described above, a case in which the camera 4 is a side-view camera was described. In the present embodiment, calibration of the external parameters 125 will be described in a case in which the camera 4 is a front camera capturing images of the front of the self-vehicle 1A or a rear camera capturing images of the rear of the self-vehicle 1A. If the camera 4 is a front camera or a rear camera, the images captured by the camera 4 will capture the front bumper or rear bumper as part of the vehicle body 10.

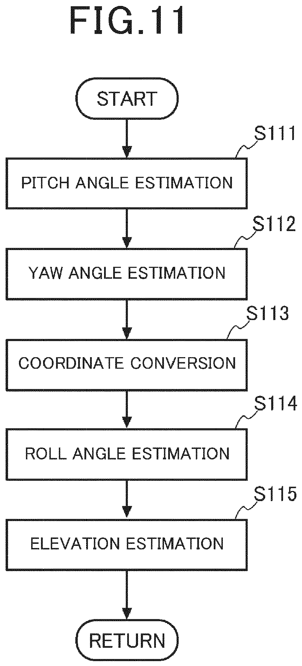

FIG. 11 is a flowchart showing an operation of the external parameter estimation unit 158 in case the camera 4 is at least one of a front camera or a rear camera. The operation of the external parameter estimation unit 158 will be described with reference to the flowchart shown in FIG. 11. The external parameter estimation unit 158 executes the operations described below every time an execution command is input from the execution determination unit 157. The subject performing the operations of each step described below is the processor 150.

At Step S111, the external parameter estimation unit 158 performs pitch angle estimation. The external parameter estimation unit 158 estimates the pitch angle through a computation using information on the feature point trajectories stored in the feature point registration table 126 and the external parameters 125 stored in the RAM 113. The external parameter estimation unit 158 estimates the pitch angle by designing an objective function to evaluate the parallelism of the feature point trajectories and minimizing the designed objective function relative to the pitch angle using a well-known technique.

The designed objective function is based on a function to evaluate the parallelism of two feature point trajectories. The external parameter estimation unit 158 creates a plurality of pairs of two feature point trajectories, and designs the total sum of the objective functions of all of the created pairs of feature point trajectories as an objective function to estimate the pitch angle. Therefore, the pitch angle is corrected so that all the feature point trajectories become as parallel as possible.

The selected pairs of feature point trajectories combine feature point trajectories on the left side of the center of the self-vehicle 1A and feature point trajectories on the right side of the center of the self-vehicle 1A, in other words, feature point trajectories on the left side of the movement direction of the self-vehicle 1A and feature point trajectories on the right side of the movement direction of the self-vehicle 1A. As selected pairs of feature point trajectories, all conceivable combinations may be selected, or only some of these may be selected.

At Step S112, the external parameter estimation unit 158 performs yaw angle estimation. The external parameter estimation unit 158 estimates the yaw angle through a computation using information on the feature point trajectories stored in the feature point registration table 126 and the external parameters 125 with the pitch angle updated at Step S111.

The external parameter estimation unit 158 designs an objective function to evaluate the verticality of the feature point trajectories, that is to say how closely the feature point trajectories follow the movement direction in a bird's-eye view. The external parameter estimation unit 158 realizes yaw angle estimation by minimizing the designed objective function relative to the yaw angle using a well-known technique. The objective function designed here is based on a function to evaluate the verticality of one feature point trajectory, and the external parameter estimation unit 158 designs the total sum of the objective functions of all of the feature point trajectories as an objective function to estimate the pitch angle. Therefore, the yaw angle is calculated so that all the feature point trajectories are oriented as much as possible in a vertical direction. The external parameter estimation unit 158 rewrites the yaw angle of the external parameters 125 with the estimated yaw angle and stores the rewritten yaw angle in the RAM 113.

At Step S113, the external parameter estimation unit 158 performs coordinate conversion of the pitch angle estimated at Step S111 and the yaw angle estimated at Step S112. The pitch angle estimated at Step S111 and the yaw angle estimated at Step S112 are parameters on the basis of the road surface. However, the roll angle estimated in the subsequent Step S114 is a parameter on the basis of the vehicle body 10 of the self-vehicle 1A. If parameters calculated on different bases are used as they are, consistency cannot be ensured, and therefore coordinate conversion of the pitch angle and yaw angle is performed. The external parameter estimation unit 158 performs coordinate conversion of the pitch angle and yaw angle, which are parameters on the basis of the road surface, so that they become parameters on the basis of the vehicle body 10 of the self-vehicle 1A. The external parameter estimation unit 158 stores the coordinate-converted pitch angle and yaw angle in the RAM 113.

At Step S114, the external parameter estimation unit 158 estimates the roll angle. The external parameter estimation unit 158 estimates the roll angle through a computation using the external parameters 125 stored in the RAM 113, the vehicle body design information 124, and the edge of the vehicle body 10 recognized by the self-vehicle body recognition unit 153.

The external parameter estimation unit 158 corrects the roll angle so that the edge of the vehicle body 10 recognized by the self-vehicle body recognition unit 153 matches the edge of the vehicle body 10 which should be visible if the camera 4 is mounted at an ideal position calculated based on the vehicle body design information 124. The edge of the vehicle body 10 in this case is, for example, a bumper. The external parameter estimation unit 158 designs an objective function to evaluate a matching degree of the edge of the vehicle body 10, and estimates the roll angle by minimizing the designed objective function relative to the roll angle using a well-known technique. The external parameter estimation unit 158 rewrites the roll angle of the external parameters 125 with the roll angle estimated at Step S114, and stores it in the RAM 113.

At Step S115, the external parameter estimation unit 158 performs an elevation estimation. The external parameter estimation unit 158 estimates the elevation of the camera 4 mounted to the vehicle body 10 from the road surface through a computation using information on the feature point trajectories stored in the feature point registration table 126 and the external parameters 125 updated by the process of Step S114.

The external parameter estimation unit 158 estimates the elevation of the camera 4 from the road surface by using a well-known technique to minimize an objective function expressing a difference between the length of the feature point trajectories and a length of the ideal trajectory predicted from the vehicle information. The objective function is designed to minimize the difference between the length of all feature point trajectories and the length of the ideal trajectory. Therefore, the elevation is corrected so that the length difference between all the feature point trajectories and the ideal trajectory becomes as small as possible, that is to say, to come closer to an ideal bird's-eye viewpoint. The external parameter estimation unit 158 rewrites the elevation of the external parameters 125 with the estimated elevation and stores it in the RAM 113.

In case the captured images are captured images capturing the front or rear of the self-vehicle 1A, the external parameter estimation unit 158 according to the second embodiment calibrates the roll angle based on the vehicle feature points extracted from the region of the captured images in which the vehicle body 10 of the self-vehicle 1A is captured. Accordingly, the roll angle of the external parameters 125 that are inaccurate due to the influence of the elevation difference in the width direction of the road can be calibrated with a high accuracy.

In addition, if the captured images are captured images capturing the front or rear of the self-vehicle 1A, the external parameter estimation unit 158 extracts feature points included in a region of the captured images in which the road surface around the self-vehicle 1A is captured to calibrate the pitch angle and yaw angle. Accordingly, by calibrating the pitch angle and yaw angle, which are not significantly influenced by the elevation difference in the width direction of the road, based on the feature points extracted from the captured image of the road surface, the pitch angle and yaw angle can be calibrated with a high accuracy.

The calibration device 100 includes the ROM 111 storing the vehicle body design information 124 of the vehicle body 10 of the self-vehicle 1A.

The external parameter estimation unit 158 calibrates the roll angle so that the vehicle body feature points extracted by the self-vehicle body recognition unit 153 match the positions of the vehicle body feature points calculated based on the vehicle body design information 124. Accordingly, calibration of the roll angle can be performed with a high accuracy based on the vehicle body feature points.

In addition, the feature point extraction unit 154 extracts feature points from a plurality of captured images. The calibration device 100 includes a tracking unit 155 that tracks the feature points extracted by the feature point extraction unit 154 to obtain feature point trajectories. The external parameter estimation unit 158 selects feature point trajectories obtained by the tracking unit 155 and calibrates the pitch angle and yaw angle based on the selected feature point trajectories. Accordingly, the pitch angle and yaw angle can be calibrated with a high accuracy.

In addition, if the captured image is a captured image capturing the front or the rear of the self-vehicle 1A, the self-vehicle body recognition unit 153 extracts the bumper of the self-vehicle 1A as a feature point. Accordingly, the feature point can easily be extracted from the captured image, and calibration of the roll angle can be performed with a high accuracy based on the extracted feature point.

The first embodiment and second embodiment described above are preferred embodiments of the present invention. However, the present invention is not limited to the above first embodiment and second embodiment, and various modifications are possible without departing from the spirit and scope of the present invention.

For example, in the above first embodiment and second embodiment, calibration of the external parameters 125 is described, but the calibration device 100 may also perform calibration of the internal parameters. Further, in the above first embodiment and second embodiment, the program is stored in the ROM 111, but the program may be stored in the flash memory 115.

In addition, if the calibration device 100 is realized by a computer, a configuration is possible in which the program to be executed by the computer is loaded into the calibration device 100 from a storage medium storing the program. For example, when it is detected that a storage medium is connected to the I/O interface 6, the calibration device 100 may load the program stored on the connected storage medium and install the program on the calibration device 100. A storage medium storing data magnetically or optically, or a semiconductor memory device may be used as the storage medium. Specifically, examples of storage media include flexible discs, HDD

(Hard Disk Drive), CD-ROM (Compact Disc Read Only Memory), DVD, Blu-ray® Discs, and magneto-optical disks. Other examples of storage media include portable storage media such as flash memories and card-type storage media, or stationary storage media. The storage medium may also be configured as a nonvolatile storage device of the memory 110 included in the calibration device 100.

Alternatively, if the calibration device 100 is realized by a computer, the program to be executed by the computer may be stored on a server device on a network accessible by the calibration device 100. The calibration device 100 downloads the program from the server device and installs and executes the downloaded program.

### Description of the Reference Numerals

1A Self-vehicle
1B Another vehicle
2 Vehicle speed sensor
3 Steering angle sensor
4 Camera
4A Left camera
4B Right camera
5 Communication interface
6 I/O interface
10 Vehicle body
100 Calibration device
110 Memory
111 ROM
113 RAM
115 Flash memory
121 While-driving calibration program
122 Camera utilization program
123 External parameter initial value
124 Vehicle body design information
125 External parameters
126 Feature point registration table
126A Left feature point registration table
126B Right feature point registration table
150 Processor
151 Image acquisition unit
152 Vehicle information acquisition unit
153 Vehicle body recognition unit
154 Feature point extraction unit
155 Tracking unit
156 Storage unit
157 Execution determination unit
158 External parameter estimation unit
159 Adoption determination unit
160 Distance detection unit
161 Display control unit
1001-1004 Feature point identifier

## Claims

1. A calibration device installed in a vehicle (1A), the calibration device **characterized by** comprising:
a first feature point extraction unit (154) configured to extract, from a captured image of a camera (4) installed in the vehicle, a first feature point included in a region of the captured image in which a road surface around the vehicle is captured;
a second feature point extraction unit (153) configured to extract, from the captured image, a second feature point included in a region of the captured image in which a vehicle body (10) of the vehicle is captured; and
a calibration unit (158) configured to calibrate, based on the first feature point and the second feature point, parameters (125) indicating a mounting state of the camera relative to the vehicle.

2. The calibration device according to Claim 1, wherein the parameters calibrated by the calibration unit include a pitch angle, which is an orientation angle of the camera relative to the vehicle, and
the calibration unit is configured to calibrate the pitch angle based on the second feature point if the captured image is a captured image capturing a side of the vehicle.

3. The calibration device according to Claim 1 or 2, wherein the parameters calibrated by the calibration unit include a yaw angle and a roll angle, which are orientation angles of the camera relative to the vehicle, and
the calibration unit is configured to calibrate the yaw angle and the roll angle based on the first feature point if the captured image is a captured image capturing a side of the vehicle.

4. The calibration device according to Claim 2, further comprising a storage unit (111) storing design information (124) of the vehicle body of the vehicle,
wherein the calibration unit is configured to calibrate the pitch angle so that the second feature point extracted by the second feature point extraction unit matches a position of the second feature point calculated based on the design information.

5. The calibration device according to Claim 3, wherein the first feature point extraction unit extracts the first feature point from a plurality of the captured images,
the calibration device further comprising a tracking unit (155) configured to obtain a movement trajectory of the first feature point extracted by the first feature point extraction unit,
wherein the calibration unit is configured to select as a subject the first feature point for which the movement trajectory is obtained by the tracking unit, and calibrate the yaw angle and the roll angle based on the movement trajectory of the selected subject first feature point.

6. The calibration device according to any one of Claims 1 to 5, wherein the second feature point extraction unit is configured to extract a lower edge of a side surface of the vehicle as the second feature point if the captured image is a captured image capturing a side of the vehicle.

7. The calibration device according to Claim 1, wherein the parameters calibrated by the calibration unit include a roll angle, which is an orientation angle of the camera relative to the vehicle, and
the calibration unit is configured to calibrate the roll angle based on the second feature point if the captured image is a captured image capturing a front or a rear of the vehicle.

8. The calibration device according to Claim 1 or 7, wherein the parameters calibrated by the calibration unit include a pitch angle and a yaw angle, which are orientation angles of the camera relative to the vehicle, and
the calibration unit is configured to calibrate the pitch angle and the yaw angle based on the first feature point if the captured image is a captured image capturing a front or a rear of the vehicle.

9. The calibration device according to Claim 7, further comprising a storage unit (111) storing design information (124) of the vehicle body of the vehicle,
wherein the calibration unit is configured to calibrate the roll angle so that the second feature point extracted by the second feature point extraction unit matches a position of the second feature point calculated based on the design information.

10. The calibration device according to Claim 8, wherein the first feature point extraction unit extracts the first feature point from a plurality of the captured images,
the calibration device further comprising a tracking unit (155) configured to obtain a movement trajectory of the first feature point extracted by the first feature point extraction unit,
wherein the calibration unit is configured to select as a subject the first feature point for which the movement trajectory is obtained by the tracking unit, and calibrate the pitch angle and the yaw angle based on the movement trajectory of the selected subject first feature point.

11. The calibration device according to any one of Claims 1, 7, 8, 9, and 10, wherein the second feature point extraction unit is configured to extract an edge of a bumper as the second feature point if the captured image is a captured image capturing a front or a rear of the vehicle.

12. The calibration device according to any one of Claims 1 to 11, wherein the first feature point extraction unit is configured to extract a corner edge, which is an intersection of edges, included in a road surface sign displayed on a road.

13. A calibration method to generate parameters indicating a mounting state of a camera (4) installed in a vehicle (1A), the method **characterized by** comprising:
a first extraction step of extracting, from a captured image of the camera, a first feature point included in a region of the captured image in which a road surface around the vehicle is captured;
a second extraction step of extracting, from the captured image, a second feature point included in a region of the captured image in which a vehicle body (10) of the vehicle is captured; and
a calibration step of calibrating, based on the first feature point and the second feature point, parameters (125) indicating a mounting state of the camera relative to the vehicle.
